# EUROPÄISCHE PATENTSCHRIFT

(11) **EP 2 476 473 B1**
(45) Veröffentlichungstag und Bekanntmachung des Hinweises auf die Patenterteilung: **26.02.2014**
(21) Anmeldenummer: 11000242.5
(22) Anmeldetag: 13.01.2011
(51) Int. Cl.: B01D 46/10, B01D 53/88

(54) **Filtermodul**
Filter module
Module de filtre

(43) Veröffentlichungstag der Anmeldung: 18.07.2012
(73) Patentinhaber: Kölsch, Peter, 78597 Irndorf (DE); Brüner, Michael, 78199 Bräunlingen (DE)
(72) Erfinder: Kölsch, Peter, 78597 Irndorf (DE); Brüner, Michael, 78199 Bräunlingen (DE)
(74) Vertreter: Maucher Börjes Jenkins

(56) Entgegenhaltungen:
- WO-A1-2009/058019
- DE-A1- 10 219 415
- DE-A1- 19 924 584
- US-A1- 2007 265 161
- US-A1- 2008 190 083

## Beschreibung

Die Erfindung betrifft ein Filtermodul für eine Filterwand zur Aufnahme von Feinstäuben, Stickoxiden und anderen Verunreinigungen der Umgebungsluft beim Betrieb von Kraftfahrzeugen auf Straßen oder Schienen mit einer vorderen und einer hinteren Wandung sowie einem zwischen den Wandungen ausgebildeten Luftstromkanal mit einer Einströmöffnung, durch die belastete Umgebungsluft in das Innere des Filtermoduls eintritt, wobei die Wandungen mit denjenigen Seiten eines Keils zusammenfallen, welche in einem Winkel zueinander orientiert sind, also unter einem Keilwinkel keilförmig aufeinander zu laufen, sodass der Luftstromkanal ausgehend von der Einströmöffnung in Strömungsrichtung immer schmaler wird, und mindestens die vordere Wandung Filtermaterial aufweist, und wobei der Luftstromkanal auf der der Einströmöffnung gegenüberliegenden Seite eine Ausströmöffnung aufweist.

### Stand der Technik und Nachteile

Beim Betrieb von Kraftfahrzeugen, insbesondere von solchen mit Verbrennungskraftmaschinen, beim Abbremsen derselben, aber auch bei anderen Verbrennungsprozessen wie z.H. beim Betrieb von Heizungen, fallen feinste Partikel, so genannte Feinstäube, an. Feinstäube sind vor allem dadurch charakterisiert, dass sie aufgrund ihrer geringen Größe (typischerweise kleiner als 10-15 Mikrometer) lungengängig sind. Sie verhalten sich aufgrund ihrer geringen Größe eher wie Gasmoleküle und nicht wie Staubpartikel. Daher stellen sie sowohl eine unmittelbare Belastung für die Atemwege dar, können aber auf diesem Wege auch in den Blutkreislauf von Personen gelangen, die mit dem Feinstaub in Kontakt gekommen sind, und so zu weitergehenden Schäden führen.
Es ist daher wünschenswert und teilweise bereits vom Gesetzgeber vorgegeben, die Feinstaubbelastung jedenfalls an Stellen extrem hoher Konzentration einerseits und hohem Personenaufkommen andererseits zu begrenzen und, nach Möglichkeit, weiter zu verringern. Gleiches gilt für Stickoxide und andere gasförmige verunreinigen und Luftschadstoffe, die ebenfalls verstärkt beim Betrieb von Verbrennungskraftmaschinen anfallen.

Aus der Druckschrift WO 2009/058019 A1 ist eine Verkehrslärmschutzwand mit Filterfunktion bekannt, die vertikal angeordnete Module aufweist, die einen in Gebrauchsstellung aufwärtsgerichteten Kamineffekt und somit eine vertikale Luftdurchströmung der Verkehrslärmschutzwand erlauben.

Bekannt sind aus dem Stand der Technik durchströmbare Filterplatten, -wände und dergleichen. Beim Durchströmen des Filtermaterials mit dem belasteten Gas bleiben die Partikel im Filtermaterial hängen. Dieses setzt sich jedoch im Laufe der Zeit zu, so dass sich der Strömungswiderstand erhöht und die Filterleistung nachlässt. Daher sollte das Filtermaterial reinigbar oder austauschbar sein.

In der Druckschrift EP 1 632 607 ist eine für Fahrwege vorgesehene Filterwand offenbart, welche der Verringerung der Feinstaubbelastung dient. Dazu sind der Filterwand zum Zwecke des Zurückhaltens von in der Luft enthaltenen Emissionen wie insbesondere Feststoffteilchen Filtermodule zugeordnet. Die Filtermodule besitzen an ihrer der Verkehrsfläche zugekehrten Seite als Gitter oder gelocht ausgestaltete vordere Wandungen, sowie an der von der Fahrbahn abgekehrten Seite angeordnete hintere Wandungen. Letztere sind parallel zu ersteren angeordnet und luftdurchlässig ausgebildet. Durch die Fahrzeugbewegungen werden Luftströmungen erzeugt, welche den in der Luft befindlichen Feinstaub vom Fahrzeug in Richtung des Filtermoduls und in dieses hinein treiben sollen. Die Luftströmung erfolgt im Wesentlichen in der Vertikalen.

Eine Durchströmbarkeit parallel zur Fahrtrichtung des Fahrzeugs ist nicht vorgesehen; auch würde sich in diesem Fall keine Filterwirkung ergeben. Um zu verhindern, dass sich bereits eingelagerter Feinstaub aufgrund der hinter dem Heck vorbeifahrender Fahrzeuge auftretenden Sogwirkung erneut losreißt, sieht eine Weiterentwicklung dieses einfachen Prinzips zusätzliche, ventilartige Anordnungen an der Wandung des Filtermoduls vor, die den Durchtritt von Luft in der Richtung lediglich von der Verkehrsfläche weg erlauben, und den Durchtritt von Luft durch den Filter zum Verkehrsweg hin verhindern.

Nachteilig an dieser Lösung ist zunächst, dass die Durchströmbarkeit des Filtermoduls gering ist, da sämtliche belastete Luft durch den Filter strömen muss. Insbesondere wenn der Filter so fein ausgestaltet ist, dass er ein Hindurchtreten des Feinstaubs vollständig verhindert, bietet der Filter der einströmenden Luft einen so großen Widerstand, dass ein wirkliches Durchströmen des Filters praktisch unmöglich wird. Dies wirkt sich wiederum negativ auf die Effektivität des vorgeschlagenen Systems aus.

Nachteilig ist außerdem, dass der Feinstaub konstruktionsbedingt den Weg durch den bzw. die Filter hindurch und somit in den sauber zu haltenden Bereich außerhalb der Fahrbahn finden kann.

### Aufgabe der Erfindung und Lösung

Aufgabe der Erfindung ist es daher, eine Vorrichtung bereitzustellen, welche die genannten Nachteile des Standes der Technik vermeidet. Die Vorrichtung soll eine verbesserte Reinigungswirkung erzielen. Ferner soll sie optional sicherstellen, dass keinerlei unerwünschte Partikel oder sonstige Schadstoffe aus dem Luftstromkanal in einen sauber zu haltenden Bereich außerhalb des Filtermoduls gelangen können.

Die Aufgabe wird durch eine Vorrichtung gemäß Hauptanspruch gelöst. Weitere vorteilhafte Ausführungsformen sind den Unteransprüchen, der detaillierten Beschreibung sowie den Figuren zu entnehmen.

### Beschreibung

Das erfindungsgemäße Filtermodul ist dadurch gekennzeichnet, dass der Luftstromkanal in Gebrauchsstellung horizontal verlaufend und die Einströmöffnung sich vertikal erstreckend angeordnet sind, wobei die Einströmöffnung an einer Stelle des Keils angeordnet ist, die einer Spitze des Keils gegenüberliegt, und dass die vordere Wandung von der im Luftstromkanal geführten Luft dort durchströmbar ist, wo Filtermaterial angeordnet ist. Durch diese Einströmöffnung kann Gas wie z.B. belastete Umgebungsluft in das Innere des Filtermoduls, also in den durch die Wandungen definierten Luftstromkanal, gelangen.
Erfindungsgemäß laufen die Wandungen unter dem Keilwinkel keilförmig aufeinander zu. Mindestens die vordere Wandung weist Filtermaterial auf und ist derart ausgestaltet, dass sie von der im Luftstromkanal geführten Luft durchströmbar ist.

"Aufnahme" oder "Adsorption" schließt dabei ein Einlagern wie auch ein z.B. chemisches Umsetzen oder Binden der zu adsorbierenden Partikel oder gasförmigen Schadstoffe ein. Die "Partikel" können fest und/oder gasförmig sein.
Die Begriffe "vorne" und "hinten" sind zunächst willkürlich gewählt. Sie sollen nicht die tatsächliche Orientierung des Filtermoduls im Raum zwingend festlegen.

"Keilförmig" bedeutet, dass die beiden Wandungen nicht parallel zueinander verlaufen, sondern mit denjenigen Seiten eines Keils zusammenfallen, welche in einem Winkel zueinander orientiert sind. Es ist klar, dass das Filtermodul noch weitere Wände aufweisen kann, die insbesondere an den übrigen Flächen des besagten Keils liegen. Der Keilwinkel ist bevorzugt ein spitzer Winkel, beträgt also weniger als 90 Grad.

Die Einströmöffnung ist bevorzugt an derjenigen Stelle des Keils angeordnet, die der Spitze des Keils gegenüber liegt.

Somit bildet der Luftstromkanal in Strömungsrichtung gesehen eine Art Trichter, der von der Einströmöffnung ausgehend immer schmaler wird. Auf diese weise wird die einströmende Luft zunächst im Luftstromkanal gefangen, den sie auf geeignetem und konstruktiv vorgegebenen Weg wieder zu verlassen sucht. Auf diesem Weg muss sie zu diesem Zweck bereitgestelltes Filtermaterial passieren. Dieses ist mindestens in der vorderen Wandung enthalten, so dass die Luft mindestens durch diese Wandung den Luftstromkanal verlassen kann. Es ist klar, dass die Luft den Luftstromkanal auch durch ggf. vorhandene weitere Öffnungen verlassen kann, worauf später noch eingegangen wird.

Das erfindungsgemäße Filtermodul weist einen geringen Strömungswiderstand für die einströmende, verunreinigte Luft auf, wodurch sich eine verbesserte Reinigungswirkung ergibt. Es sei angemerkt, dass gemäß einer typischen Situation, in welcher das erfindungsgemäße Filtermodul besonders vorteilhaft eingesetzt werden kann, die Emissionsquelle der Verunreinigungen ein mit Fahrzeugen befahrener Fahrweg ist, die Emission selber Feinstaub (z.B. PM1 bis PM10; PM = Particulate Matter gemäß Standard der US-Umweltschutzbehörde), Rußpartikel und/oder gasförmige Schadstoffe wie z.B. Stickoxide (z.B. Stickstoffdioxid) betrifft, die vordere Wandung der Emissionsquelle zugewandt und die hintere Wandung der Emissionsquelle abgewandt ist, und die Einströmöffnung entgegen der Fahrtrichtung angeordnet ist und sich vertikal erstreckt. Somit sind Kraftfahrzeugstraßen und Schienenwege ein bevorzugtes Einsatzgebiet der Erfindung, wobei die vordere Wandung mit dem Filtermaterial dem Fahrweg zugewandt ist, und die Einströmöffnung vom Fahrweg aus erreichbar ist. Grundsätzlich können das erfindungsgemäße Filtermodul oder eine aus mehreren solchen Modulen zusammengesetzte Filterwand mit horizontal verlaufendem Luftstromkanal eingesetzt werden, wie es nachfolgend beschrieben wird.

Die Erfindung ist jedoch auch an anderen Orten einsetzbar, beispielsweise dort, wo Emissionsquellen nur örtlich begrenzt und/oder im Wesentlichen stationär auftreten, z.B. beim Sandstrahlen oder beim Lackieren von Gegenständen, beim Betrieb von Heizungsanlagen, beim Verbrennen von Gülle etc. Lediglich die aktive oder passive Durchströmung des Filtermaterials ist sicherzustellen, worauf nachfolgend noch eingegangen wird.

Nach einer bevorzugten Ausführungsform ist zwischen der vorderen und der hinteren Wandung mindestens eine weitere, Filtermaterial aufweisende Wandung vorhanden, durch welche der Luftstromkanal unterteilt ist. Das bedeutet, dass der Luftstromkanal nicht einen einzigen, sondern mehrere nebeneinander liegende Bereiche umfasst. Alle diese Bereiche sind jedoch mit der Einströmöffnung verbunden und werden von ihr mit (belasteter) Luft gespeist. Es ist klar, dass nicht alle weiteren Wandungen Filtermaterial umfassen müssen, wobei dies jedoch bevorzugt ist. Auf diese Weise entsteht eine fächerartige Struktur des Innenraums des erfindungsgemäßen Filtermoduls. Durch Bereitstellung von einer oder mehreren weiteren Wandungen wird die für die Luftreinigung zur Verfügung stehende Filterfläche deutlich gesteigert, so dass bei gleichem einströmenden Volumen eine bessere Reinigungswirkung erzielt werden kann. Die Reinigungswirkung wird durch das Durchströmen der Filtermaterial umfassenden Wandungen erzielt.

Für den vorstehend beschriebenen Fall weiterer Wandungen kann es zu der unerwünschten Situation kommen, dass die Luft beiderseits einer bestimmten Wandung unter dem gleichen Druck steht. Dies ist zu erwarten, wenn der Strömungswiderstand beider Bereiche gleich ist, z.B. aufgrund gleichen Rauminhalts oder gleicher Geometrie. Daher ist bevorzugt, dass der Luftstromkanal durch die mindestens eine weitere Wandung in unterschiedlich große Bereiche unterteilt ist. Auf diese Weise bilden sich bei gleichem, an der jeweiligen Teil-Einströmöffnung anliegenden Druck und/oder Einströmgeschwindigkeit unterschiedliche Drücke in den einzelnen Kammern aus. Somit strömt die Luft von der Kammer mit dem höheren Druck in die ihr benachbarte Kammer mit dem geringeren Druck. Auf dem Weg durch die dazwischen liegende Wandung werden Verunreinigungen vom Filtermaterial zurückgehalten.

Für den Fall von drei oder mehr Bereichen ist besonders bevorzugt, dass die Volumina der oben beschriebenen Bereiche von der vorderen zur hinteren Wandung hin zunehmen. Somit bildet sich in dem Bereich, der an die hintere Wandung angrenzt, der höchste Druck auf, der sich dann schrittweise von Bereich zu Bereich verringert. Der Bereich, der an die vordere Wandung angrenzt, weist den geringsten Druck auf. Somit kann eine kontinuierliche Strömungsrichtung aus Richtung der hinteren in Richtung der vorderen Wandung erreicht werden. Es ist klar, dass auch andere Muster denkbar sind, beispielsweise mit dem das größte oder kleinste Volumen aufweisenden Bereich in der Mitte des Luftstromkanals.

Nach einer weiteren bevorzugten Ausführungsform ist die mindestens eine Filtermaterial aufweisende Wandung ausschließlich von der im Luftstromkanal geführten Luft durchströmbar.

Unbeachtet der vorhandenen Ausströmöffnung bedeutet dies, dass die im Luftstromkanal geführte Luft nur durch diese mindestens eine Wandung austreten kann. Sie kann hingegen nicht durch diese Wandung in den Luftstromkanal eintreten.

Dies ist dadurch erreichbar, dass Ventile oder ventilartige Strukturen die Strömungsrichtung bestimmen. Eine konstruktiv besonders einfache Ausführungsform derartiger Strukturen weist Bahnen aus flexiblem Material (z.B. Kunststofffahnen) auf, die vor Löchern an derjenigen Seite der Wandung angeordnet sind, auf die die Luft strömen können soll. In Normalstellung verschließen die beispielsweise schlaff herabhängenden Bahnen die Löcher. Luft, die auf die Bahnen strömt, drückt diese gegen die Wandungsoberfläche, so dass die Löcher verschlossen bleiben. Wird hingegen von der anderen Seite Luft durch die Löcher geblasen, drückt diese die Bahnen von der Wandungsoberfläche weg und somit aus dem Weg, so dass die Luft strömen kann. Es ist klar, dass zu einer Verbesserung der Ventilwirkung Dichtungen oder andere, dem Fachmann wohlbekannte Mittel vorgesehen sein können. Auch eine Ventilwirkung ohne bewegte Teile ist möglich, sofern sie beispielsweise auf unterschiedlichen Strömungswiderständen unterschiedlicher Geometrien am Ein- und Ausgang eines Lochs in der Wandung basiert (Trichter).

Nach einer weiteren bevorzugten Ausführungsform ist die hintere Wandung von der im Luftstromkanal geführten Luft nicht durchströmbar. Mit anderen Worten ist diese Wandung im Wesentlichen luft- bzw. gasdicht ausgeführt, oder sie weist einen so hohen Strömungswiderstand auf, dass die Luft im Luftstromkanal ganz vorwiegend andere Wege als den durch die hintere Wandung sucht. Es ist dabei zunächst unerheblich, dass die Luft durch ggf. vorhandene weitere Öffnungen an der hinteren Wandung vorbei strömen kann. Es ist aber klar, dass für den Fall, dass ein Strömen von Luft in den Bereich jenseits der hinteren Wandung vermieden werden soll, der Luftstromkanal in die betreffende Richtung geschlossen ist.

Für den Fall, dass die vordere und die hintere Wandung aus dem gleichen Grundmaterial wie z.B. Holz bestehen, ergibt sich dieser Unterschied im Strömungswiderstand gewöhnlich schon dadurch, dass die hintere Wandung keine Löcher oder sonstigen Öffnungen aufweist. Auch Filtermaterial ist typischerweise an der dem. Innenraum des Filtermoduls zugewandten Seite der hinteren Wandung nicht vorhanden.

Durch diese Bauform wird erreicht, dass verunreinigte Luft weder aus dem Inneren des Filtermoduls noch aus Richtung eines ggf. vorhandenen Fahrwegs auf die der Emissionsquelle abgewandte Seite gelangen kann, die somit von verunreinigter Luft frei gehalten werden kann.

Nach einer weiteren, besonders bevorzugten Ausführungsform weist der Luftstromkanal auf der der Einströmöffnung gegenüber liegenden Seite eine Ausströmöffnung auf. Die Ausströmöffnung ist demnach bevorzugt an der Spitze des Keils angeordnet, so dass der spitze Keil zu einem Keilstumpf wird. Der Vorteil dieser Anordnung liegt darin, dass es zu keinem Luftstau im Luftstromkanal kommen kann, sondern dass immer ein Lufttransport durch den Innenraum des Filtermoduls möglich ist, also auch bei verstopftem Filtermaterial und somit erhöhtem Strömungswiderstand durch die Wandungen hindurch.

Der beschriebene Keil bei einem horizontal verlaufenden Luftstromkanal liegt auf einer seiner Seitenflächen. Die Spitze zeigt (bei einem Fahrweg) in Fahrtrichtung, die Einströmöffnung entgegen derselben. Dabei weist der Luftstromkanal zusätzlich zu der Einströmöffnung und der vorhandenen Ausströmöffnung wie z.B. oben und/oder unten bzw. links und/oder rechts angeordnete weitere Öffnungen zum Ein- bzw. Ausströmen von Luft auf. So kann beispielsweise Luft, ggf. zusätzlich, von unten in den Luftstromkanal eines solchen Filtermoduls gelangen, und ggf. oben ausströmen.

Nach einer weiteren Ausführungsform umfasst das Filtermodul eine oder zwei seitliche Wandungen. Diese sind derart angeordnet, dass sie sich im Bereich der Ein- und/oder ggf. der Ausströmöffnung befinden. Es ist klar, dass auch diese seitlichen Wandungen durchströmbar sein müssen, und dass sie besonders bevorzugt auch geeignetes Filtermaterial umfassen. Der Strömungswiderstand dieser seitlichen Wandungen ist bevorzugt gering, um die Durchströmbarkeit des Filtermoduls nicht signifikant zu beeinträchtigen. Dies kann z.B. durch entsprechende Wahl des Filtermaterials oder durch in ausreichender Zahl vorhandene Lücken oder Öffnungen in der bzw. den seitlichen Wandungen sichergestellt werden.

Dabei ist das Filtermaterial ein poröses Material, welches bevorzugt aus der Gruppe bestehend aus Lavagestein, Blähglas, Glasschaumschotter, Bimsstein, Tuffstein, Blähglimmer, Blähton, haufwerksporigem Beton, und Mischungen derselben ausgewählt ist. Anorganische Materialien sind bevorzugt. Alternativ können aber auch organische Materialien wie z.B. Hackschnitzel Verwendung finden. Auch Mischungen verschiedener Materialien sind möglich, um z.B. die vorteilhaften Wirkungen dieser Materialien miteinander zu kombinieren, oder um neue Eigenschaften zu bewirken, die sich erst im Zusammenspiel ergeben.

Eine wesentliche Eigenschaft des bevorzugten porösen Materials ist eine möglichst große Oberfläche. Besonders bevorzugt ist das poröse Material beschichtbar. Eine weitere, bevorzugte Eigenschaft ist die Schallabsorption, die insbesondere von Lavagestein bereitgestellt wird.

Nach einer besonders bevorzugten Ausführungsform ist das poröse Material mit einer fotokatalytischen Substanz beschichtet, welche bevorzugt aus der Gruppe bestehend aus Titanoxiden, Eisenoxiden, Chromoxiden, Platinverbindungen, und Mischungen derselben ausgewählt ist. Die betreffende fotokatalytische Substanz bewirkt eine so genannte fotokatalytische Selbstreinigung des Filtermaterials sowie eine Umsetzung von angelagerten Schadstoffen. Typischerweise werden hierfür Oberflächen, z.B. mit Nanopartikeln aus entsprechendem Material wie z.B. Titandioxid (Ti02), beschichtet. Im Rahmen des fotokatalytischen Effekts werden insbesondere organische Materialien auf der Oberfläche durch Bestrahlung mit Licht wie insbesondere mit Sonnenlicht in gewünschter Weise umgesetzt. Die Fotokatalyse erstreckt sich auch beispielsweise auf angelagerte Luftschadstoffe wie z.B. Stickoxide, die in Nitrate umgewandelt werden, oder auch auf andere gasförmige Stoffe. Ein weiteres Beispiel betrifft die Umsetzung von leicht flüchtigen Kohlenwasserstoffen (VOCs) in CO2 und Wasser.

Eine bevorzugte fotokatalytische Substanz stellt Titandioxid (TiO,) dar. Neben der kristallinen Form von TiO2, Rutil, ist die anatase Form von Titandioxid, Anatas, als besonders reaktionsfreudige Form bevorzugt. Da diese Form besonders auf Licht mit. hohem UV-Anteil anspricht, ist hierfür Sonnenlicht oder entsprechendes künstliches Licht bevorzugt. Um die Effektivität weiter zu steigern, kann auch für ein breiteres Lichtspektrum empfindlicher, z.B. dotierter, Anatas verwendet werden. Ferner sind solche Materialien bevorzugt, bei welchen der fotokatalytische Effekt auch nach Beenden der Bestrahlung anhält.

Das Aufbringen der fotokatalytischen Beschichtung auf das poröse Material erfolgt z.B. mittels Tauchbeschichtung, Sprühverfahren, oder mittels PVD-Techniken (PVD = physical vapour deposition, Bedampfung). Auch das Aufbringen im Rahmen einer Sinterung ist möglich. Außerdem ist ggf. die Nutzung eines Bindemittels vorteilhaft. Besonders bevorzugt ist, auch aus Kostengründen, die Tauchbeschichtung.

Durch Bereitstellung einer möglichst großen Oberfläche wird auch eine große Reaktionsfläche bereitgestellt. Es ist klar, dass es vorteilhaft ist, wenn die entsprechenden Oberflächen auch möglichst lang und intensiv mit Licht in Kontakt kommen, worauf später eingegangen wird.

Die Reaktionsprodukte können gasförmig oder flüssig sein, so dass sie mit der Luftströmung, ggf. nach Verdampfen, abtransportierbar sind. Feste Reaktionsprodukte können zumindest vorübergehend an den Oberflächen verbleiben, von wo sie wiederum durch Luftströmung oder durch Abwaschen entfernbar sind. Daher kann es vorteilhaft sein, Wasser, z.B. Regenwasser, auf die fotokatalytisch beschichteten Oberflächen gelangen zu lassen oder zu lenken, da gewisse Reaktionen nur oder begünstigt in wässriger Umgebung ablaufen, und/oder Wasser der Abreinigung der Umsetzungsprodukte dienen kann.

Ein Filtermodul, das poröses Material umfasst, welches mit entsprechenden katalytischen Stoffen beschichtet ist, kann somit durch Umwandlung von Stickoxiden (NOₓ) und anderer toxischer Schadstoffe zwecks Reduzierung derselben besonders vorteilhaft im Bereich von Fahrwegen wie insbesondere Autobahnen oder anderen stark befahrenen Straßen dienen.

Wenngleich die Abmaße des erfindungsgemäßen Filtermoduls prinzipiell frei wählbar sind, lassen sich für den typischen Fall einer Fahrwegabgrenzung eine Reihe bevorzugter Maße angeben. Demnach beträgt die Gesamthöhe zwischen 0,5 und 12,0 Meter und bevorzugt 3,0 Meter. Die Gesamtbreite beträgt zwischen 3,0 und 7,0 Meter und bevorzugt 5,0 Meter. Der Keilwinkel beträgt zwischen 5 und 60 Grad und bevorzugt zwischen 10 und 30 Grad, besonders bevorzugt 15 Grad. Die Breite der Einströmöffnung beträgt zwischen 30 und 100 Zentimeter und bevorzugt zwischen 70 und 90 Zentimeter, besonders bevorzugt 80 Zentimeter, und die Breite der ggf. vorhandenen Ausströmöffnung beträgt zwischen 10 und 50 Zentimeter und bevorzugt zwischen 15 und 30 Zentimeter, besonders bevorzugt 20 Zentimeter.

"Gesamtbreite" meint die Ausdehnung des Luftstromkanals von der Einströmöffnung bis hin zum derselben gegenüber liegenden Ende des Filtermoduls. Mit "Breite" ist der Abstand zwischen dem Rand der vorderen und der hinteren Wandung im Bereich der entsprechenden Öffnung gemeint. Typischerweise stehen demnach die "Gesamtbreite" und die "Breite" in etwa senkrecht zueinander.

Es gilt außerdem, dass bei einer kurzen Wandung ("Länge" des Keils) ein großer Keilwinkel bevorzugt ist und umgekehrt. Auf diese Weise wird sichergestellt, dass Einström- und ggf. vorhandene Ausströmöffnung in einem sinnvollen Verhältnis zueinander und zum Rest der Geometrie stehen.

Es ist klar, dass sich aus dem spezifischen Anwendungsfällen bevorzugte Modulmaße ergeben, die sich z.B. auch an DIN-, ISO-oder sonstigen, auch von Anbietern selbst geschaffenen "de-facto"-Standards orientieren können.

Nach einer bevorzugten Ausführungsform ist die vordere Wandung derart ausgestaltet, dass sie, von Innen nach Außen gesehen, eine oder mehrere der folgenden Schichten umfasst: ein Deckbrett; Rückwandbohlen; feinporiges Dämmmaterial, das auch als Wärmedämmung einsetzbar ist; ein Glasvlies; Lava-Schotter, der optional mit TiO₂ beschichtet und/oder mit Holzschnitzeln versetzt ist; ein Gitter, z.B. aus Polyethylen; Keilleisten als Abschluss, die großflächige Öffnungen zu der dahinter liegenden Schicht lässt.

Nach einer weiteren bevorzugten Ausführungsform weist das erfindungsgemäße Filtermodul ferner mindestens ein im oder am Luftstromkanal angeordnetes aktives oder passives Strömungsmittel zur Verstärkung der im Luftstromkanal geführten Luftströmung auf. Dieses Strömungsmittel dient demnach der Verbesserung der Effektivität des erfindungsgemäßen Filtermoduls, indem der Volumendurchsatz durch den Luftstromkanal erhöht wird, und/oder indem der in letzterem herrschende Druck, unter welchem die belastete Luft durch das Filtermaterial gepresst wird, verstärkt wird.

Besonders bevorzugt sind passiv wirkende Strömungsmittel, da diese keine externe (elektrische) Energieversorgung benötigen. Ein Beispiel hierfür ist ein so genannter Zugverstärker, wie er auf Kaminen eingesetzt wird. Angetrieben durch Wind, saugt er das im Kamin vorhandene Luftvolumen an und unterstützt so die Strömung. Es ist klar, das ein solcher Zugverstärker an entsprechend exponierter Stelle angebracht ist, z.B. oben auf dem Filtermodul, oder in den Bereich desselben, der starker Anströmung durch Fahrzeuge ausgesetzt ist.

Ein weiteres Beispiel für ein passives Strömungsmittel sind Luftleitbleche oder Windleitvorrichtungen, die in ohnehin stark angeströmten Bereichen angeordnet sein können, wo sie die umgebende Luftströmung in Richtung der Einströmöffnung lenken. Im Falle eines Fahrweges sind solche Luftleitbleche an der vorderen, dem Fahrweg zugewandten Wandung im Bereich der Einströmöffnung angeordnet und vergrößern auf konstruktiv einfache Weise den "Trichter", welcher die vorbeiströmende Luft einfängt und in das erfindungsgemäße Filtermodul lenkt. Umgekehrt können im Bereich der Ausströmöffnung Vorrichtungen angebracht sein, die einen von außen induzierten Sog auf den Luftstromkanal bewirken.

Ein Beispiel hierfür sind Tragflügelprofile, welche besonders bevorzugt an der nach oben offenen Seite des Filtermoduls platziert sind. Werden diese Tragflügelprofile angeströmt, beispielsweise durch den Fahrtwind vorbeifahrender Fahrzeuge, so bildet sich auf der Unterseite eines solchen Profils ein Unterdruck aus. Dieser sucht das im Luftstromkanal befindliche Volumen anzusaugen und somit zu beschleunigen. Es ist klar, dass derartige Tragflügelprofile an einer Stelle des erfindungsgemäßen Filtermoduls angeordnet sein müssen, an der sie der externen Strömung in ausreichendem Maße ausgesetzt sind.

Aktive Ventilatoren bieten gegenüber passiven Strömungsmitteln den Vorzug, unabhängiger und ggf. witterungsgeschützter positioniert werden zu können. Hier bietet sich insbesondere eine Anordnung im Inneren des Luftstromkanals an, der in diesem Fall besonders bevorzugt auf der Oberseite abgedeckt ist, um Regenwasser abzuhalten. Auch sind sie von dem tatsächlichen Auftreten äußerer Strömungen unabhängig.

Neben den die Strömung verstärkenden Mitteln können auch solche Mittel bereitgestellt sein, die lediglich einer Schwächung der Strömung entgegenwirken. Beispielhaft seien hier Luftleitbleche genannt, welche scharfkantige und/oder im Strömungspfad liegende Bauelemente wie z.B. Pfosten abdecken. Somit kann die Strömung diese Hindernisse möglichst ungehindert umströmen und verliert nur wenig Energie.

Nach einer weiteren Ausführungsform sind die vordere Wandung und die hintere Wandung aufeinander zu bewegbar. Dies ist gleichbedeutend mit einer Verkleinerung des oben genannten Keilwinkels. Auf diese Weise lässt sich das Filtermodul besser und platzsparender transportieren, beispielsweise von einem Herstellungs- zu einem Aufstellungsort. Die Bewegbarkeit kann beispielsweise dadurch erreicht werden, dass eine der Wandungen im Bereich der Keilspitze drehbar gelagert ist, so dass der Keilwinkel variierbar ausgestaltet ist. Auf diese Weise ist auch eine flexible Anpassung des Keilwinkels an unterschiedliche bauliche, strömungstechnische oder geografische Gegebenheiten erreichbar. Selbstverständlich ist derselbe Effekt auch durch eine bewegliche Lagerung der hinteren Wandung oder beider Wandungen erzielbar. Ferner können auch ggf. vorhandene weitere Wandungen entsprechend gelagert sein. Neben einer drehbaren Lagerung kommt beispielsweise auch eine Einhängbarkeit in entsprechende Lager oder Ösen in Betracht. Es ist klar, dass zudem Mittel zur Fixierung des Keilwinkels vorzusehen sind, damit sich dieser nach einmaliger Justage nicht wieder verstellen kann.

Nach einer weiteren Ausführungsform ist unterhalb des Luftstromkanals mindestens eine Auffangrinne für Flüssigkeit angeordnet. Diese Auffangrinne dient insbesondere dem Auffangen belasteter Flüssigkeit, die bei Regen oder z.B. beim Reinigen von auswaschbarem Filtermaterial anfällt. Die Auffangrinne kann wahlweise an dem Filtermodul angebracht, oder unterhalb desselben am Boden angeordnet sein, auf dem das Filtermodul steht. Die Auffangrinne muss nicht jederzeit am Filtermodul vorhanden oder an diesem für die entsprechende Aufgabe korrekt positioniert sein; auch eine vorübergehende Anbringbarkeit und/oder korrekte Positionierbarkeit der Auffangrinne ist möglich. So kann diese auch beispielsweise nur zu Reinigungszwecken angebracht bzw. korrekt positioniert sein, und andernfalls abgenommen bzw. in eine andere, z.B. nicht sichtbare Position verschwenkt sein. Es ist klar, dass vorteilhafterweise außerdem ein Abfluss und/oder ein Sammelbecken bereitzustellen ist, wohin die in die Rinne strömende Flüssigkeit abfließen kann.

Eine weitere Ausführungsform sieht vor, dass mindestens eine Filtermaterial aufweisende Wandung austauschbar ist. Auf diese Weise kann eine besonders schnelle und einfache Wartung des erfindungsgemäßen Filtermoduls erfolgen. Der Austausch erfolgt bevorzugt nach oben oder zur Einströmöffnung hin. Dazu sind beispielsweise Rinnen, in welchen die einzelnen Wandungen gleitend gelagert sind, vorzusehen. Die ausgetauschten Wandungen können dann bequem vor Ort oder in einer Wartungshalle einer gründlichen, bevorzugt Flüssigkeit nutzenden Reinigung unterzogen werden. Die Montagezeiten an dem Filtermodul selber und somit an oft gefährlicher, den fließenden Verkehr ausgesetzter Stelle werden minimiert.

Nach einer weiteren Ausführungsform ist nicht die gesamte Wandung, sondern lediglich das von ihr umfasste Filtermaterial auf die vorstehend beschriebene Weise gelagert bzw. austauschbar.

Nach einer weiteren Ausführungsform umfasst das erfindungsgemäße Filtermodul ferner eine Lichtleitvorrichtung zum Weiterleiten von (Sonnen)Licht auf die fotokatalytische Substanz. Wie oben erwähnt, benötigt die fotokatalytische Substanz oder Zusammensetzung Licht, insbesondere UV-Licht, um die beabsichtigte Wirkung zu zeigen. Da ein Filtermodul typischerweise eher flach und hoch aufgebaut ist, kann nur wenig Sonnenlicht in das Innere eindringen, und dies auch nur zu bestimmten Tageszeiten. Bevorzugt sind daher Spiegel, Linsen, Lichtleitfasern oder ähnlich wirkende Vorrichtungen vorhanden, die das Licht in größerem Maße und/oder über einen längeren Zeitraum in das Innere des Filtermoduls lenken. Durch intensivere und/oder großflächigere Bestrahlung ist die fotokatalytische Wirkung bzw. die durch sie umsetzbare Menge an belasteter Luft signifikant steigerbar. Für den Fall des Vorhandenseins einer Abdeckung zum Schutz des Filtermodulinneren vor Witterungseinflüssen ist diese Abdeckung bevorzugt aus einem transparenten Material wie z.B. Acrylglas gefertigt, das besonders bevorzugt eine Dicke von ca. 0,5 cm aufweist.

Nach einer bevorzugten Ausführungsform erfüllt das weiter oben beschriebene Strömungsmittel auch die Funktion der Lichtleitvorrichtung oder umgekehrt. Beispielsweise können ein Tragflügelprofil oder Luftleitbleche gleichzeitig als Spiegel ausgestaltet sein, so dass das Umgebungslicht in den Luftstromkanal und insbesondere auf die fotokatalytische Substanz, mit dem das poröse Material beschichtet ist, umgelenkt wird.

Außerdem kann eine Vorrichtung zur Erzeugung von Licht, insbesondere von UV-Licht, vorgesehen sein, welche alternativ oder zusätzlich für eine Bestrahlung der fotokatalytisch aktiven Bereiche dient. Diese Vorrichtung ist wahlweise Teil der erfindungsgemäßen Vorrichtung oder dieser lediglich zugeordnet. Sie ist besonders bevorzugt im Inneren der erfindungsgemäßen Vorrichtung angeordnet, oder sie ist an dieselbe ankoppelbar, um nicht dauerhaft an oder in der Vorrichtung belassen werden zu müssen. Dies ist insbesondere im Hinblick auf deren ggf. nicht unerhebliche Kosten wünschenswert. Je nach Effektivität der fotokatalytischen Beschichtung kann es auch ausreichen, in bestimmten, größeren Zeitintervallen, beispielsweise im Rahmen einer Wartung, mit einer solchen ankoppelbaren Vorrichtung die Beschichtung zu bestrahlen und somit zu aktivieren.

Die Erfindung betrifft neben einem einzelnen Filtermodul auch eine aus derartigen Modulen aufgebaute Filterwand.

Eine Filterwand besteht somit aus mindestens einem ersten und einem zweiten Filtermodul gemäß obiger Definition, wobei diese Filtermodule nebeneinander angeordnet sind. Sofern neben der Einströmöffnung auch eine Ausströmöffnung vorgesehen ist, ist besonders bevorzugt, dass die Ausströmöffnung des ersten Filtermoduls an den Bereich der Einströmöffnung des zweiten Filtermoduls angrenzt. Auf diese Weise kann belastete Luft, welche nicht vollständig durch Passieren des Filtermaterials eines ersten Filtermoduls gereinigt wurde, in ein nachfolgend angeordnetes Filtermodul strömen, wo sie dann einer weiteren Reinigung unterzogen wird. Sie gelangt somit gar nicht erst wieder in die Umgebung, sondern wird stufenweise von unerwünschten Emissionen befreit.

Die vorstehend beschriebene Erfindung erzielt gegenüber dem Stand der Technik eine verbesserte Reinigungswirkung. Sie stellt aufgrund der Undurchlässigkeit der hinteren Wandung sicher, dass keinerlei unerwünschte Partikel aus dem Luftstromkanal in einen sauber zu haltenden Bereich außerhalb des Filtermoduls gelangen können. Durch Kombination mit einer fotokatalytischen Schicht kann die Reinigungswirkung weiter gesteigert bzw. auf andere Stoffe wie Stickoxide oder andere toxische Feinstäube ausgedehnt werden. Durch die Möglichkeit des Weiterströmens ungereinigter Luft in ein nachfolgendes Filtermodul wird dieselbe vom Raum außerhalb des Strömungskanals ferngehalten, und nur gereinigte Luft verlässt denselben in Richtung eines Fahrwegs. Die Erfindung ist bevorzugt im Bereich stark befahrener Fahrwege einsetzbar, aber nicht auf diesen beschränkt.

### Figurenbeschreibung

- **Figur 1**: zeigt eine Schnittansicht auf eine bevorzugte Ausführungsform des erfindungsgemäßen Filtermoduls 1 von oben.
- **Figur 2**: zeigt eine Schnittansicht auf eine weitere bevorzugte Ausführungsform des erfindungsgemäßen Filtermoduls 1 von oben.
- **Figur 3**: zeigt eine Ansicht der Ausführungsform gemäß Fig. 2 von der Seite.
- **Figur 4**: zeigt eine Draufsicht auf einen Fahrweg 10 mit einer Filterwand, die sich aus Filtermodulen 1 der erfindungsgemäßen Art zusammensetzt.

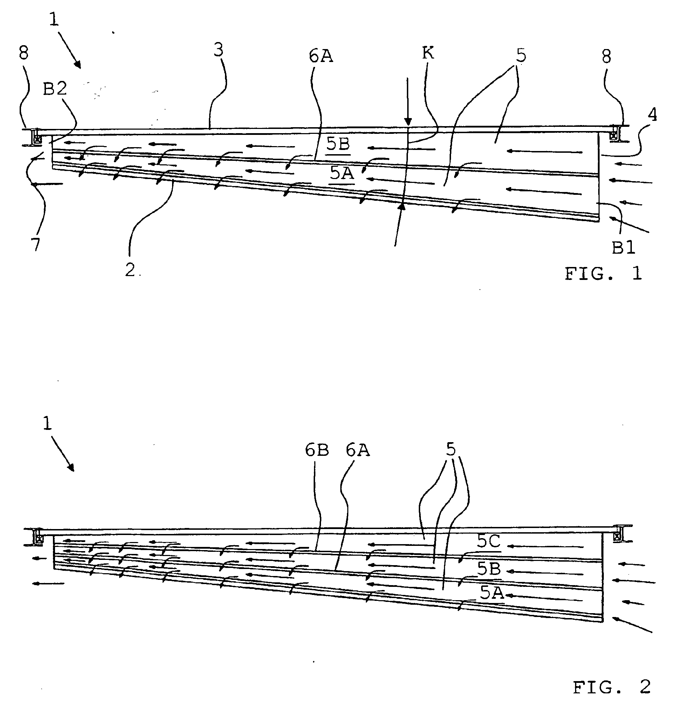

In der **Figur 1** ist eine Schnittansicht auf eine bevorzugte Ausführungsform der erfindungsgemäßen Filtermoduls 1 von oben gezeigt. Das Filtermodul 1 ist demnach auf einem Untergrund (nicht dargestellt) dergestalt befestigt, dass sich seine vordere Wandung 2 und seine hintere Wandung 3 in vertikaler Richtung erstrecken, also senkrecht auf der Zeichenebene stehen. Die beiden Wandungen 2 und 3 verlaufen nicht parallel, sondern stehen in einem Keilwinkel K zueinander. In der gezeigten Ausführungsform entsteht so die Form eines auf einer Seite liegenden Keils, genauer, eines Keilstumpfs.

Rechts im Bild ist die Einströmöffnung 4 dargestellt. Diese mündet in den Luftstromkanal 5, der vorliegend mittels einer weiteren Wandung 6A in zwei Bereiche 5A und 5B unterteilt ist.

Links im Bild ist die Ausströmöffnung 7 dargestellt. Sie hat eine Breite B2, welche kleiner als die Breite B1 der Einströmöffnung 4 ist. Auf diese Weise ergibt sich die oben genannte Keilform. Der Luftstromkanal verjüngt sich entlang seiner Längsachse.

Wie gezeigt erstrecken sich die Breite B1 der Einströmöffnung 4 und die Breite B2 der Ausströmöffnung in etwa senkrecht zur hinteren Wandung 3, wobei dies jedoch nicht zwingend nötig ist.

Die kleinen, nicht bezeichneten Pfeile dieser wie auch der nachfolgenden Figuren stellen die Luftströmung dar. Ein Teil der Luft durchströmt den Luftstromkanal 5 in longitudinaler Richtung. Ein gewisser Teil passiert jedoch die weitere Wandung 6A und strömt von dem zweiten Bereich 5B in den ersten Bereich 5A, bzw. von diesem durch die vordere Wandung 2 in den Bereich jenseits der vorderen Wandung 2. Da diese weitere Wandungen 6AFiltermaterial umfasst (nicht dargestellt), wird die sie durchströmende Luft zumindest teilweise von Verunreinigungen befreit. Da die hintere Wandung 3 luftundurchlässig aufgebaut ist, kann die Luftströmung sie auch nicht passieren. Auf diese Weise wird verhindert, dass verunreinigte oder noch nicht vollständig gereinigte Luft auf die Seite jenseits der hinteren Wandung 3 gelangt.

Zur Verankerung ist das Filtermodul 1 mit entsprechenden Pfosten 8 verbunden, die im Untergrund verankert sind (nicht dargestellt).

Die Ausführungsform der **Figur 2** unterscheidet sich von der zuvor beschriebenen lediglich dadurch, dass sie nicht eine, sondern zwei weitere Wandungen 6A und 6B umfasst, die den Luftstromkanal 5 in drei Bereiche 5A, 5B und 5C aufteilen. Die Funktionsweise ist ansonsten identisch, weswegen auf eine erneute Erläuterung derselben sowie auf die entsprechenden Bezugszeichen in der Figur 2 verzichtet wird.

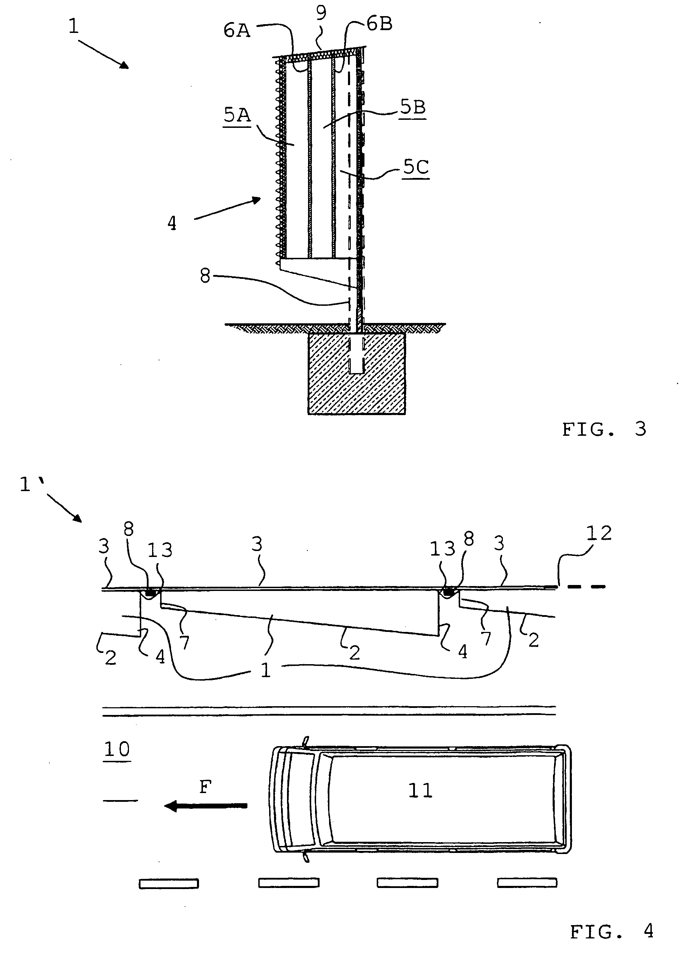

Die **Figur 3** zeigt eine Seitenansicht der in der Figur 2 dargestellten Ausführungsform des Filtermoduls 1. Dabei weist der Blick in die Einströmöffnung 4 hinein. Gut erkennbar sind die beiden weiteren Wandungen 6A und 6B, welche den Luftstromkanal in drei Bereiche 5A, 5B und 5C teilen. Mittels des Pfostens 8 ist das Filtermodul 1 im Untergrund, beispielsweise in einem Betonfundament, verankert. Als Witterungsschutz ist auf der Oberseite des Filtermoduls eine Abdeckung 9 angeordnet. Diese ist wie gezeigt vorzugsweise geneigt ausgestaltet, um z.B. Regenwasser (nicht dargestellt) effektiv ableiten zu können. Dieses kann in einer Auffangrinne gesammelt und gewünschtenfalls einer Sammeleinrichtung zugeführt werden (jeweils nicht dargestellt).

In der **Figur 4** ist schließlich eine Filterwand 1' gezeigt, die aus erfindungsgemäßen Filtermodulen 1 aufgebaut ist. Diese sind so angeordnet, dass ihre hinteren Wandungen 3 miteinander fluchten, also eine gemeinsame Ebene 12 bilden. Diese ist, wie dargestellt, möglichst nahtlos, so dass Luft keine Möglichkeit hat, die gemeinsame Ebene 12 zu passieren. Die Filterwand 1' ist seitlich eines Fahrwegs 10 angeordnet. Dieser weist eine Fahrtrichtung F auf. Ein Fahrzeug 11, das sich auf dem Fahrweg 10 fortbewegt, erzeugt eine Luftströmung sowie einen Staudruck (jeweils nicht dargestellt), die bzw. den es vor sich herschiebt. Bei Vorbeifahrt an der Filterwand 1' wird durch diesen Staudruck ein Teil der Luft in die Einströmöffnungen 4 der Filtermodule 1 gedrückt. Dieser Teil wird, wie in der Figur 1 und 2 gezeigt, zumindest teilweise gereinigt. Anschließend tritt er jeweils durch die vordere Wandung 2 wieder in Richtung des Fahrwegs 10 aus. Der nicht gereinigte Teil verlässt das jeweilige Filtermodul 1 durch dessen Ausströmöffnung 7. Da die Ausströmöffnung 7 eines Filtermoduls 1 mit geringem Abstand zur Einströmöffnung 4 des in Fahrtrichtung F gesehen nachfolgenden Filtermoduls 1 angeordnet ist, wird die nicht gereinigte Luft in das nachfolgende Filtermodul 1 transportiert, wo sie dann erneut der Möglichkeit einer Reinigung ausgesetzt wird, ohne in den Bereich des Fahrwegs 10 oder gar in den Bereich jenseits der Filterwand 1` (oben im Bild) zu gelangen zu können.

Die Filterwirkung wird durch den Effekt eines Unterdrucks verstärkt, welcher typischerweise an den Seiten eines sich bewegenden Fahrzeugs 11 entsteht. Dieser Unterdruck wirkt als Sog auf die dem Fahrweg 10 zugewandte Seite eines Filtermoduls 1 (vordere Wandung 2). Erfindungsgemäß sind diese und auch die weiteren Wandungen, mit bevorzugter Ausnahme der hinteren Wandung 3, von der im Luftkanal geführten Luft durchströmbar ausgestaltet. Somit unterstützt der Sog eines vorbeifahrenden Gefährts 11 den Durchtritt von im Filtermodul-Inneren befindlicher, noch ungereinigter Luft durch die Wandungen, und somit durch das Filtermaterial. Dabei wird die Luft gereinigt. Da zudem nach einer bevorzugten Ausführungsform (nicht dargestellt) die Luft nicht in entgegengesetzter Richtung durch die Wandungen strömen kann, führt der o.g. Staudruck nicht zu einem Losreißen von bereits im Filtermaterial aufgefangenen Partikeln. Beide beschriebenen Effekte zusammen ergeben somit eine Art "Pumpeffekt", mittels dessen die Luft besonders effektiv durch das Filtermaterial geführt wird.

Ergänzend sind zwischen den einzelnen Modulen 1 vor den jeweiligen Pfosten 8 Luftleitbleche 13 angeordnet, die einer Abschwächung der Strömung beim Übertritt von einem in das nachfolgende Modul entgegenwirken.

### Bezugszeichenliste

- 1: Filtermodul
- 1`: Filterwand
- 2: vordere Wandung
- 3: hintere Wandung
- 4: Einströmöffnung
- 5: Luftstromkanal
- 5A: erster Bereich
- 5B: zweiter Bereich
- 6A,6B: weitere Wandung
- 7: Ausströmöffnung
- 8: Pfosten
- 9: Abdeckung
- 10: Fahrweg
- 11: Fahrzeug
- 12: gemeinsame Ebene
- 13: Luftleitblech
- K: Keilwinkel
- B1: Breite der Einströmöffnung
- B2: Breite der Ausströmöffnung
- F: Fahrtrichtung

## Patentansprüche

1. Filtermodul (1) für eine Filterwand zur Aufnahme von Feinstäuben, Stickoxiden und anderen Verunreinigungen der Umgebungsluft beim Betrieb von Kraftfahrzeugen auf Straßen oder Schienen mit einer vorderen und einer hinteren Wandung (2, 3) sowie einem zwischen den Wandungen (2, 3) ausgebildeten Luftstromkanal (5) mit einer Einströmöffnung (4), durch die belastete Umgebungsluft in das Innere des Filtermoduls (1) eintritt, wobei die Wandungen (2, 3) mit denjenigen Seiten eines Keils zusammenfallen, welche in einem Winkel zueinander orientiert sind, also unter einem Keilwinkel (K) keilförmig aufeinander zu laufen, sodass der Luftstromkanal (5) ausgehend von der Einströmöffnung (4) in Strömungsrichtung immer schmaler wird, und mindestens die vordere Wandung (2) Filtermaterial aufweist, und wobei der Luftstromkanal (5) auf der der Einströmöffnung (4) gegenüberliegenden Seite eine Ausströmöffnung (7) aufweist, **dadurch gekennzeichnet, dass** der Luftstromkanal (5) in Gebrauchsstellung horizontal verlaufend und die Einströmöffnung (4) sich vertikal erstreckend angeordnet sind, wobei die Einströmöffnung (4) an einer Stelle des Keils angeordnet ist, die der Spitze des Keils gegenüberliegt, und dass die vordere Wandung (2) von der im Luftstromkanal (5) geführten Luft dort durchströmbar ist, wo Filtermaterial angeordnet ist.

2. Filtermodul (1) nach Anspruch 1, **dadurch gekennzeichnet, dass** zwischen der vorderen und der hinteren Wandung (2, 3) mindestens eine weitere als poröses Material ausgebildetes Filtermaterial aufweisende Wandung (6A, 6B) vorhanden ist, durch welche der Luftstromkanal (5) unterteilt ist.

3. Filtermodul (1) nach Anspruch 2, **dadurch gekennzeichnet, dass** der Luftstromkanal (5) durch die mindestens eine weitere Wandung (6A, 6B) in unterschiedlich große Bereiche (5A, 5B, 5C) unterteilt ist.

4. Filtermodul (1) nach einem der Ansprüche 1 bis 3, **dadurch gekennzeichnet, dass** die mindestens eine weitere, poröses Material als Filtermaterial aufweisende Wandung (6A, 6B) ausschließlich von der im Luftstromkanal (5) geführten Luft durchströmbar ist.

5. Filtermodul (1) nach einem der vorhergehenden Ansprüche, **dadurch gekennzeichnet, dass** die hintere Wandung (3) von der im Luftstromkanal (5) geführten Luft nicht durchströmbar (luftundurchlässig) ist.

6. Filtermodul (1) nach einem der vorhergehenden Ansprüche, **dadurch gekennzeichnet, dass** das poröse Filtermaterial aus der Gruppe bestehend aus Lavagestein, Blähglas, Glasschaumschotter, Bimsstein, Tuffstein, Blähglimmer, Blähton, haufwerksporigem Beton und Mischungen derselben ausgewählt ist.

7. Filtermodul (1) nach Anspruch 6, **dadurch gekennzeichnet**, das poröse Material mit einer fotokatalytischen Substanz beschichtet ist, welche bevorzugt aus der Gruppe bestehend aus Titanoxiden, Eisenoxiden, Chromoxiden, Platinverbindungen, und Mischungen derselben ausgewählt ist.

8. Filtermodul (1) nach einem der vorhergehenden Ansprüche bzw. nach einem der Ansprüche 1 bis 7, bei dem die Gesamthöhe zwischen 0,5 und 12 , 0 Meter und bevorzugt 3,0 Meter, und/oder die Gesamtbreite zwischen 3,0 und 7,0 Meter und bevorzugt 5,0 Meter, und/oder der Keilwinkel (K) zwischen 5 und 60 Grad und bevorzugt zwischen 10 und 30 Grad und besonders bevorzugt 15 Grad, und/oder die Breite (B1) der Einströmöffnung (4) zwischen 30 und 100 Zentimeter und bevorzugt zwischen 70 und 90 Zentimeter und besonders bevorzugt 80 Zentimeter, und/oder die Breite (B2) der ggf. vorhandenen Ausströmöffnung (7) zwischen 10 und 50 Zentimeter und bevorzugt zwischen 15 und 30 Zentimeter und besonders bevorzugt 20 Zentimeter betragen.

9. Filtermodul (1) nach einem der vorhergehenden Ansprüche, welches ferner mindestens ein im oder am Luftstromkanal (5) angeordnetes aktives oder passives Strömungsmittel zur Verstärkung der im Luftstromkanal (5) geführten Luftströmung aufweist.

10. Filtermodul (1) nach einem der vorhergehenden Ansprüche, wobei als aktives Strömungsmittel ein Ventilator insbesondere im Inneren des Luftstromkanals (5) vorgesehen ist.

11. Filtermodul (1) nach einem der vorhergehenden Ansprüche, bei dem die vordere Wandung (2) und die hintere Wandung (3) aufeinander zu bewegbar sind und/oder mindestens eine Filtermaterial aufweisende Wandung (2, 6A, 6B) austauschbar ist.

12. Filtermodul (1) nach einem der vorhergehenden Ansprüche, bei dem unterhalb des Luftstromkanals (5) mindestens eine Auffangrinne für Flüssigkeit angeordnet ist.

13. Filtermodul (1) nach einem der Ansprüche 8 bis 12, welches ferner eine Lichtleitvorrichtung zum weiterleiten von Sonnenlicht auf die fotokatalytische Substanz umfasst.

14. Filterwand (1') umfassend mindestens ein erstes und ein zweites Filtermodul (1) gemäß Definition nach einem der Ansprüche 1 bis 13, die nebeneinander angeordnet sind, wobei die Ausströmöffnung (7) des ersten Filtermoduls (1) an den Bereich der Einströmöffnung (4) des zweiten Filtermoduls (1) angrenzt.

## Claims

1. Filter module (1) for a filter wall to trap particulate matter, nitrogen oxides and other pollutants in the ambient air from the operation of vehicles on road or railway with a front and rear wall (2, 3) and an air flow passage (5) created between the walls (2, 3), with an intake opening 4, through which the contaminated ambient air gets into the interior of the filter module (1), with the walls (2, 3) coinciding with the sides of a wedge which are at an angle to each other, i.e. under a wedge angle K converging as a wedge shape, so that the air flow passage (5) gets narrower starting from the inlet opening (4) in the direction of the flow and at least the front wall(2)has filter material, with the air flow passage (5)has an outlet opening (7) positioned on the side opposite the intake opening (4) **characterized by** the air flow passage (5)being horizontal with the intake opening (4) arranged vertically with the intake opening (4) positioned at a place in the wedge opposite to the point of the wedge, and with the front wall(2)being permeable to the air in the air flow passage(5)where the filter material is.

2. Filter module (1) as claim 1, **characterized by** there being at least one further wall of porous material (6A, 6B) between the front and rear wall (2, 3,) dividing the air flow passage (5).

3. Filter module (1) as claim 2, **characterized by** the air flow passage (5) being divided into different sizes (5A, 5B, 5C) by at least one further wall {6A, 6B).

4. Filter module (1) as claims 1 to 3, **characterized by** at least one further wall (6A, 6B) with a filter of porous material being permeable to the air in the air flow passage (5).

5. Filter module (1) as one of the previous claims **characterized by** the rear wall (3) not being permeable (airtight) to the air in the air flow passage (5).

6. Filter module(1)as one of the previous claims **characterized by** the porous material being selected from the group consisting of lava stone, foam glass, foam glass gravel, pumice, tufa stone, mica, clay pebbles, no-fines concrete, and mixtures thereof.

7. Filter module(1)as claim 6, **characterized by** the porous material being coated with a photo catalytic substance, preferably selected from the group consisting of titanium oxides, iron oxides, chromium oxides, platinum compounds, and mixtures thereof.

8. Filter module(1)as one of the previous claims or one of the claims 1 to 7, with the total height being between 0.5 and 12.0m, preferably 3.0m, total width between 3,0 and 7.0m, preferably 5.0m, the angle of the wedge between 5 and 60 degrees and preferably between 10 and 30 degrees, particularly preferable is 15 degrees, the width of the intake opening between 30 and 100 cm and preferably between 70 and 90cm, particularly preferable is 80cm, and the width of any outlet opening is between 10 and 50 cm and preferably between 15 and 30cm, particularly preferable is 20cm.

9. Filter module (1) as one of the previous claims but which in addition has at least one active or passive means for enhancing the flow of air conducted in the air flow passage (5).

10. Filter module (1) as one of the previous claims, whereby the active means for enhancing the flow of air is a ventilator inside the air flow passage(5).

11. Filter module (1) as one of the previous claims, whereby the front wall (2) and the rear wall (3) are movable towards one another and / or at least one of the walls (2, 6A, 6B) has a filter material which can be replaced.

12. Filter module (1) as one of the previous claims, whereby there is at least one collecting channel for liquids arranged below the air flow passage.

13. Filter module (1) as one of the claims 8 to 12,in addition having light guiding device enabling (sun) light to get to the photo catalytic substance.

14. Filter wall (1 ¹containing at least a first and second filter module in accordance with the definitions in one of the claims 1-13, with the filter modules arranged next to one another, with the outlet opening (7) of the first filter module adjoining the area of the intake opening of the second filter module (1).

## Revendications

1. Module de filtration (1) pour une paroi destinée à absorbée les poussières fines, oxydes d'azote et autres impuretés/saletés contenues dans l'air ambiant lors de l'utilisation de véhicules motorisés sur les routes ou rails avec une paroi avant et une paroi arrière (2, 3) et un canal de flux (5) formé entre les parois (2, 3) avec une ouverture d'entrée/accès (4) servant d'accès à l'air ambiant pollué/chargé à l'intérieur du module de filtration (1). Les parois forment un coin/angle les unes par rapport aux autres (K) permettant au canal de flux (5) de se réduire entre l'ouverture d'accès/entrée (4) dans le sens des flux. Le système dispose d'au-moins une paroi avant (2) dotée de matériaux filtrants, avec un canal de flux (5) dont l'ouverture d'entrée/accès (4) se trouve à l'opposé de l'ouverture de sortie/évacuation (7) permettant ainsi que le canal de flux (5) soit utilisé dans le sens horizontal et l'ouverture d'accès/entrée (4) dans le sens vertical avec l'ouverture d'entrée/accès (4) situé au niveau d'un coin/angle, loin de la partie supérieure, et la paroi avant (2) traversable/franchissable depuis le canal de flux (5) via les matériau de filtration.

2. Module de filtration (1) selon exigence et principe 1, permettant qu'entre la paroi et la paroi arrière (2, 3), au-moins un autre matériau poreux soit utilisé comme matériaux de filtration sur la paroi concernée (6A, 6B) chargée de séparée le canal de flux (5).

3. Module de filtration (1) selon exigence et principe 2, permettant que le canal de flux (5) soit séparé par au-moins une autre paroi (6A, 6B) en zones de différentes tailles (5A, 5B, 5C).

4. Module de filtration (1) selon exigences et principes 1 à 3, permettant qu'un autre matériau poreux soit au-moins utilisé comme matériaux de filtration sur la paroi (6A, 6B) et la circulation de l'air dans le canal de flux (5).

5. Module de filtration (1) selon l'une des exigences et l'un des principes précédents, permettant que la paroi arrière (3) du canal de flux (5) et l'air véhiculé ne traversent pas (imperméable à l'air).

6. Module de filtration (1) selon l'une des exigences et l'un des principes précédents, permettant qu'un autre matériau poreux soit au-moins utilisé dans le groupe pierre de lave, verre expansé, granulat de verre cellulaire, pierre ponce, tuf, mica, argile expansé, béton à structure ouverte et mélanges équivalents comme matériaux de filtration.

7. Module de filtration (1) selon exigence et principe 6, permettant le revêtement des matériaux poreux par une couche de substance photocatalytique issus du groupe des oxydes de titane, de fer, de chrome, alliages en platine et mélanges équivalents.

8. Module de filtration (1) selon l'une des exigences et l'un des principes précédents, allant de 1 à 7, affichant une hauteur comprise entre 0,5 et 12,0 mètres, de préférence 3,0 mètres et/ou la largeur générale comprise entre 3,0 et 7,0 m, de préférence 5,0 mètres, et/ou un coin/angle (K) de 5 et 60 degrés, de préférence entre 10 et 30 degrés, voire même 15 degrés. La largeur (B1) de l'ouverture d'entrée (4) est comprise entre 30 et 100 cm, de préférence entre 70 et 90 cm, voire 80 cm, et la largeur de l'ouverture d'évacuation/échappement (7) se situe entre 10 et 50 cm, de préférence entre 15 et 30 cm voire 20 cm.

9. Module de filtration (1) selon l'une des exigences et l'un des principes précédents, disposant en plus d'au-moins un ou plusieurs fluides circulants actifs ou passifs dans le canal de flux (5) dans le but de renforcer les courants présents dans le canal (5).

10. Module de filtration (1) selon l'une des exigences et l'un des principes précédents, avec un ventilateur servant de fluide circulant actif, notamment à l'intérieur du canal de flux (5).

11. Module de filtration (1) selon l'une des exigences et l'un des principes précédents, disposant de la paroi avant (2) et de la paroi arrière (2) mobiles et/ou d'au-moins un matériau de filtration présent sur une paroi (2, 6A, 6B) .

12. Module de filtration (1) selon l'une des exigences et l'un des principes précédents, disposant en-dessous du canal de flux (5) d'au-moins une rigole de récupération des liquides/fluides.

13. Module de filtration (1) selon exigences et principes 8 à 12, avec en plus un système de réflexion de lumière destiné à rediriger la lumière du soleil vers la substance photocatalytique.

14. Module de filtration (1) composé d'au-moins un premier et un second module de filtration (1) conformément à la définition et aux principes 1 à 13, installé l'un à côté de l'autre, avec l'ouverture d'échappement (7) du premier module de filtration (1) situé dans la zone de l'ouverture d'accès/entrée (4) du deuxième module de filtration (1).
